# EUROPEAN PATENT SPECIFICATION

(11) **EP 1 772 360 B1**
(45) Date of publication and mention of the grant of the patent: **23.03.2016**
(21) Application number: 06255167.6
(22) Date of filing: 06.10.2006
(51) Int. Cl.: B62J 7/04

(54) **Straddle-type vehicle**
Zweiradfahrzeug
Véhicule à deux roues

(30) Priority: 07.10.2005 JP 2005294673; 28.08.2006 JP 2006231304
(43) Date of publication of application: 11.04.2007
(73) Proprietor: Yamaha Hatsudoki Kabushiki Kaisha, Iwata-shi, Shizuoka 438-8501 (JP)
(72) Inventor: Taki, Atsushi, Iwata-shi Shizuoka-ken 438-8501 (JP)
(74) Representative: Moreland, David

(56) References cited:
- EP-A- 0 262 912
- EP-A- 0 463 942
- EP-A- 1 510 450
- JP-A- 61 191 486
- JP-A- 2001 063 657
- US-A- 4 697 664
- US-A1- 2005 155 804

## Description

### Technical Field

The present invention relates to a straddle-type vehicle provided with a luggage storage compartment that is positioned beneath a seat on which a rider sits.

### Background Art

Generally, a great deal of attention is focused on the ease of use of scooter straddle-type vehicles that allow the rider to place both feet on a flat floor panel, such as the size etc. of luggage that can be stored on the vehicle.

Given these circumstances, various researches have been conducted up to now focusing on maximizing the size and length of luggage that can be stored in a vehicle with a size that is constrained. For example, art is known in which a scooter straddle-type vehicle is provided with a luggage storage compartment beneath a seat on which the rider sits (for example, refer to Patent Document JP-A-4-55181 (Page 3, FIGS. 2 to 3)). In this case, the luggage storage compartment can store a long object like a tennis racquet.

As described above, generally a great deal of attention is focused on the ease of use of scooter straddle-type vehicles. Accordingly, it is important to enlarge the size of the area in which luggage can be stored. Thus, there has been demand for further enlarging the luggage storage compartment in a vehicle with a constrained size, without impairing the function of the vehicle as a scooter straddle-type vehicle.

The invention has been devised in light of the above described circumstances, and it is an object of embodiments thereof to provide a straddle-type vehicle that allows a luggage storage compartment to be further enlarged in a vehicle with a constrained size, without impairing the function of the vehicle as a scooter straddle-type vehicle.

JP61-191486, is the closest prior art and discloses all of the features of the preamble of claim 1, it describes a scooter type vehicle that comprises a body frame, a seat and a storage box provided below a rear part of the seat. Various components such as a tank are provided under the seat forwardly of the storage box. The storage box extends wider than seat rails of the frame and rearwardly of a rear wheel axle. A member of the seat extends below a seat cushion and rearwardly of the seat cushion.

JP2001-063657 describes a motorbike having a storage box. The motorcycle has a seat that has a split structure including a main seat on which a driver sits and a tandem seat (rear seat) on which a passenger sits. An upper opening of the storage box may be opened and closed by a lid hinge plate for supporting the main seat. The storage box has a length extending over the length of the seat. The storage box consists of a front box section located below the main seat, and rear box section located below the tandem seat. The box almost covers the front face of the cylinder head cover of an engine unit. The front box sections are bound tightly to a top side pipe of the frame with bolts. A supporting boss part of a swollen part of the rear box section is fixed to the side pipe with four bolts. The rear box section protrudes at the back wall and the protrusion is supported by section of a rear frame. Seat load receiving parts are located on a left and right of a partition boss section of the storage box. Both the main seat and the tandem seat comprise cushioning material arranged on a bottom plate and covered with an outer layer.

EP1510450 discloses a scooter in which a storage box is disposed below a rider's seat. The scooter includes a power unit that includes an engine and a power transmission disposed below a storage box to be vertically swingable together with the rear wheel. The rider's seat is openable upward above a rotational shaft disposed at the front end side thereof, and the rider's seat also functions as a lid of the storage box. The storage box has a flat bottom surface with a rearward and downward inclination so as to be almost parallel to the axial line of the cylinder. Furthermore, the storage box is moulded so that the rear end portion of the bottom surface protrudes in a circular shape at its central portion.

Various aspects of the present invention are defined in the independent claims. Some preferred features are defined in the dependent claims.

Described herein by way of example only is a straddle-type vehicle comprising at the least a body frame, a seat, a luggage storage compartment that is provided beneath the seat, and a rear wheel axle, in which: the luggage storage compartment has a front wall section, a side wall section, and a rear wall section. The side wall section is positioned further to the outside in a vehicle width direction than the body frame; the front wall section is positioned beneath a front end section of the seat when the straddle-type vehicle is viewed from a side surface thereof; and the rear wall section is positioned further to the rear than the rear wheel axle when the straddle-type vehicle is viewed from the side surface thereof.

According to the straddle-type vehicle with the above described structure, the front wall section of the luggage storage compartment is positioned beneath the front end section of the seat when the straddle-type vehicle is viewed from the side surface thereof. As a result, the function of the vehicle as a scooter straddle-type vehicle on which the rider can sit with both feet placed on a flat floor panel is not impaired.

In addition, the side wall section of the luggage storage compartment is positioned further to the outside in the vehicle width direction than the body frame, and the rear wall section is positioned further to the rear than the rear wheel axle when the straddle-type vehicle is viewed from the side surface thereof. Accordingly, the luggage storage compartment can be enlarged within a vehicle with a constrained size.

Further according to the invention a structure in which, the first aspect of the invention is configured such that a tail lamp unit is disposed at a rear section of the straddle-type vehicle; and the luggage storage compartment is formed upward from the tail lamp unit.

A third aspect of the invention describes a structure in which the straddle-type vehicle is configured such that the luggage storage compartment has a tail lamp unit support section that supports a tail lamp unit.

A fourth aspect of the invention describes a structure configured such that a curved section that curves to form a protruding section that points, when the straddle-type vehicle is viewed in a plan view, in a vehicle rearward direction is formed in a rear end of a tail lamp unit; and a rear end section of the luggage storage compartment has a shape that extends along the curved section when the straddle-type vehicle is viewed in the plan view.

A fifth aspect of the invention describes a structure configured such that a tail lamp unit has a brake lamp unit and a pair of flasher lamp units that are positioned to the outer sides in the vehicle width direction from the brake lamp unit; and the pair of flasher lamp units form a curved section as a result of being positioned further forward than the brake lamp unit when the straddle-type vehicle is viewed in the plan view.

A sixth aspect of the invention describes a structure configured such that a flasher lamp unit has a bulb; and an axis line of the bulb extends forwards and downwards when the straddle-type vehicle is viewed from the side surface thereof.

A seventh aspect of the invention describes a structure which includes a hinge section that connects the seat and the side wall section such that the seat can be opened and closed.

An eighth aspect of the invention describes a structure configured such that a seat hinge section is positioned further to the outside in the vehicle width direction than the side wall section.

A ninth aspect of the invention describes a structure configured such that the seat includes: a seat cushion that has a mounting surface on which the rider sits; a bottom plate that is attached to a surface that is on the opposite side to the mounting surface; and a seat cover that is contiguous with the seat cushion and that structures an outer surface.

A tenth aspect of the invention describes a structure configured such that the luggage storage compartment includes a load bearing section that bears load applied to the seat.

An eleventh aspect of the invention describes a structure configured such that the side wall section is positioned further to the outside in the vehicle width direction than a load receiving section.

A twelfth aspect of the invention describes a structure configured such that a seat bottom plate extends further to the rear than the seat cushion when the straddle-type vehicle is viewed from the side surface thereof, and the bottom plate has a section that is positioned further upward than a bottom surface of the seat cushion at a rear section of the bottom plate.

A thirteenth aspect of the invention describes a structure in which a seat lock that locks the seat can be opened and closed by making a center on a hinge section; and a load bearing section is positioned to the front and the rear of the seat lock.

A fourteenth aspect of the invention describes a structure configured such that, among the sections of the luggage storage compartment, at least the side wall section is made of synthetic resin material; and a seat lock is attached to the side wall section.

A fifteenth aspect of the invention describes a structure configured such that the luggage storage compartment has a partition board support protrusion on which an end of a partition board, which partitions the luggage storage compartment in an upward-downward direction, is mounted; and the partition board support protrusion is formed to extend along the side wall section from a bottom surface of the luggage storage compartment.

A sixteenth aspect of the invention describes a structure configured such that the luggage storage compartment has an attachment protrusion that is fixed to the body frame and that protrudes downwards from the bottom surface of the luggage storage compartment; and the body frame has a predetermined thickness in the vehicle height direction and has a recess that receives the attachment protrusion.

A seventeenth aspect of the invention describes a structure configured such that the body frame includes two seat rails that extend in the vehicle length direction and that are positioned side by side in the vehicle width direction; and a cross member that extends in the vehicle width direction and that connects the seat rails; and an attachment protrusion-receiving recess is formed in the cross member.

An eighteenth aspect of the invention describes a structure configured such that the luggage storage compartment is provided with a load bearing section that bears load applied to the seat; and the load bearing section is positioned above the body frame.

A nineteenth aspect of the invention describes a structure configured such that the luggage storage compartment has a battery mounting section on which a battery is mounted; and the battery mounting section is provided on a bottom surface of a front section of the luggage storage compartment.

A twentieth aspect of the invention describes a straddle-type vehicle comprising, an internal combustion engine which has a cylinder head and is mounted on the body frame such that an axis line of the cylinder head extends in substantially horizontal direction, in which the luggage storage compartment has a front wall section, the front wall section is positioned above the cylinder head when the straddle-type vehicle is viewed from a side surface thereof.

A twenty first aspect of the invention describes a structure configured such that the internal combustion engine has a rear wheel axle support section that supports the rear wheel axle, and is a unit swing type internal combustion engine that is pivotably supported with respect to the body frame such that the internal combustion engine is capable of swinging along with a rear wheel.

A twenty second aspect of the invention describes a structure which includes a fuel tank that stores fuel that is supplied to the internal combustion engine; and a footboard on which a rider can place his/her feet, and in which the fuel tank is positioned beneath the footboard.

A twenty third aspect of the invention describes a structure configured such that the cylinder head is positioned to the rear of a fuel tank.

A twenty fourth aspect of the invention describes a structure configured such that the luggage storage compartment is provided with a standing handle that a rider holds when he stands the straddle-type vehicle up on a stand.

A twenty fifth aspect of the invention describes a structure which includes a side cover that covers an outer side surface of the luggage storage compartment from the outer side in the vehicle width direction, and in which the side cover is provided with an access hole that allows the standing handle to be held.

The various aspects of the invention may have utility separately and distinctly of the first aspect of the invention.

According to the aspects of the invention, there can be provided a straddle-type vehicle that allows a luggage storage compartment to be further enlarged within a vehicle with a constrained size, without impairing the function of the vehicle as a scooter straddle-type vehicle.

Next, an embodiment of a straddle-type vehicle according to the invention will be described with reference to the drawings. Note that, in the appended drawings, sections that are the same or similar are denoted with the same or similar reference numerals. However, the figures are only schematic and thus it should be noted that the ratios of the dimensions are not representative of the real structure.

However, the concrete dimensions etc. can be determined based on consideration of the following explanation. In addition, it will be apparent that there are sections included in the different drawings that have dimension relationships and ratios that are different from each other.

### Brief Description of the Drawings

Fig. 1 is a left side view of a motorcycle according to an embodiment of the invention.
Fig. 2 is a left side view of the motorcycle according to the embodiment of the invention when outer covers are not attached.
Fig. 3 is a left side view of a luggage storage box according to the embodiment of the invention.
Fig. 4 is a plan view (a top view) of the luggage storage box according to the embodiment of the invention.
Fig. 5 is a perspective view of the luggage storage box according to the embodiment of the invention.
Fig. 6 is a cross sectional view along the direction of the F6-F6 line shown in FIG. 3, and more particularly is a cross sectional view of the luggage storage box (when a seat is closed) according to the embodiment of the invention.
Fig. 7 is a cross sectional view of the luggage storage box (when the seat is open) according to the embodiment of the invention.
Fig. 8 is a cross sectional view along the direction of the F8-F8 line shown in FIG. 3.
Fig. 9 is a perspective view looking diagonally downwards on a seat lock storage area according to the embodiment of the invention.
Fig. 10 is a diagram showing the structure of the seat according to the embodiment of the invention.
Fig. 11 is a diagram showing the structure of a hinge section according to the embodiment of the invention.
Fig 12 is diagram showing the structure of the hinge section according to the embodiment of the invention.
Fig. 13 includes a plan view (a top view), a front view and a side view of a battery cover according to the embodiment of the invention
Fig. 14 shows a usage example of the luggage storage compartment according to the embodiment of the invention.
Fig. 15 shows a usage example of the luggage storage compartment according to the embodiment of the invention.
Fig. 16 shows a usage example of the luggage storage compartment according to the embodiment of the invention.

### (1) Overall Outline of the Structure

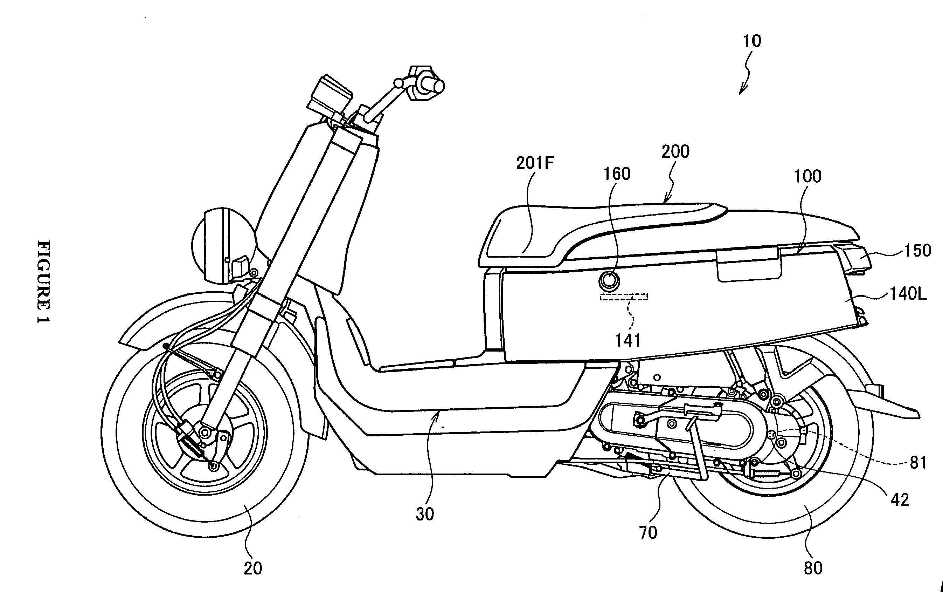

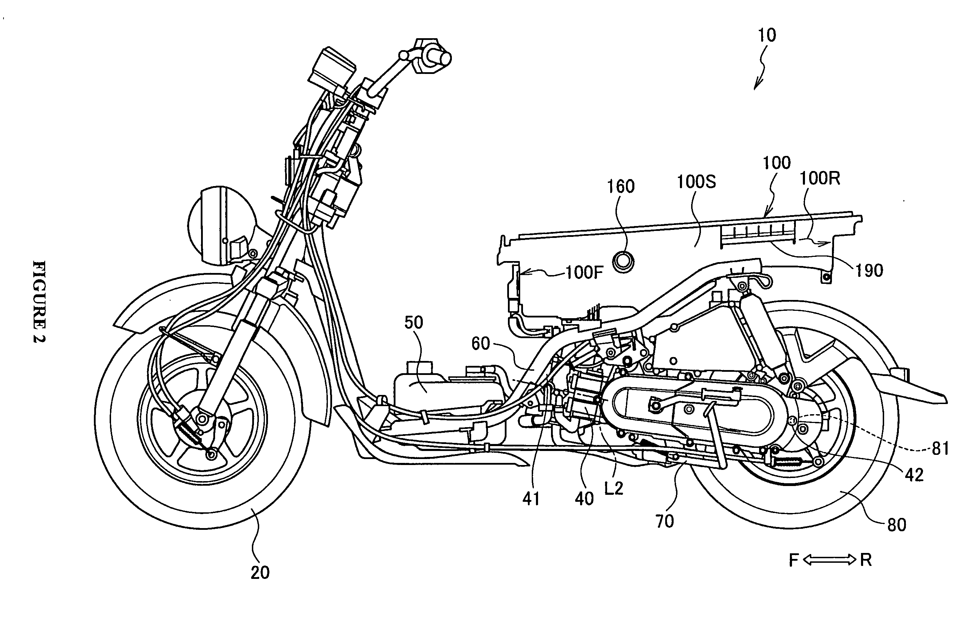

FIG. 1 shows a left side view of a motorcycle 10 that is a straddle-type vehicle according to the invention. Further, FIG. 2 is a left side view of the motorcycle 10 when outer covers (a side cover 140L, 140R etc. described hereinafter) are removed.

As can be seen from FIG. 1 and FIG. 2, the motorcycle 10 is a motorcycle that has a front wheel 20 and a rear wheel 80. The motorcycle 10 runs by transmitting driving force generated by an internal combustion engine 40 with a displacement of around 50cc to the rear wheel 80 that rotates around a rear wheel axle 81.

In addition, the motorcycle 10 is a scooter type motorcycle that the rider can ride with both feet placed on a footboard 30. The motorcycle 10 is provided with a luggage storage box 100 (a luggage storage compartment), and achieves maximum luggage storage capacity for its class.

The motorcycle 10 includes a stand 70 that supports the motorcycle 10 when it is parked so that it does not fall over. Note that, according to the present embodiment, the stand 70 is a "two-leg stand" that has legs on both the left and the right sides of the motorcycle 10. However, as an option, the motorcycle 10 may use a "side stand" that only has a leg on the left side of the motorcycle 10 and that supports the motorcycle 10 such that it leans to the left side.

The luggage storage box 100 that is a main feature of the motorcycle 10 is disposed beneath the seat 200. The outer covers, namely, the side cover 140L etc. are attached to the luggage storage box 100 so as to cover the outer side surfaces of the luggage storage box 100 from the outer sides in the vehicle width direction.

A standing handle 190 is provided on the luggage storage box 100. The rider holds the standing handle 190 in his/her hand when he stands the motorcycle 10 up on the stand 70. A seat lock 160 is attached to the luggage storage box 100, and is locked (securely shut) so that the seat 200 cannot be opened.

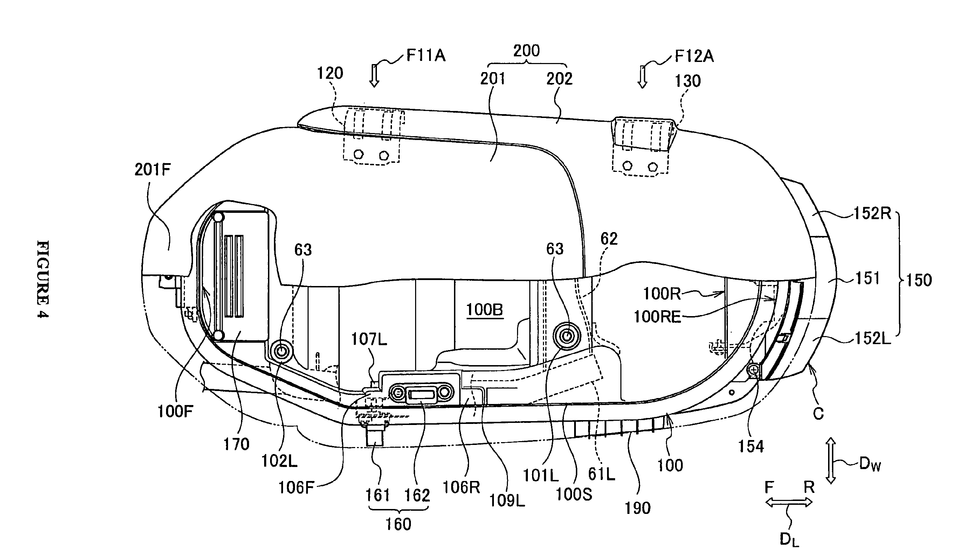

A tail lamp unit 150 is provided on a rear section of the motorcycle 10, and includes a brake lamp unit 151 and flasher lamp units 152L, 152R (although not shown in FIG. 1 or FIG. 2, refer to FIG. 4). The tail lamp unit 150 is attached to the luggage storage box 100.

Furthermore, the internal combustion engine 40 is supported by a body frame 60 beneath the luggage storage box 100. Note that, the luggage storage box 100 is also supported by the body frame 60.

The internal combustion engine 40 is a single cylinder 4-stroke internal combustion engine, and generates driving force using fuel stored in a fuel tank 50.

The fuel tank 50 stores fuel that is supplied to the internal combustion engine 40. The fuel tank 50 is disposed beneath the footboard 30. As a result of positioning the internal combustion engine 40 and the fuel tank 50 in this manner, a cylinder head 41 of the internal combustion engine 40 is positioned immediately to the rear of the fuel tank 50. In addition, the internal combustion engine 40 has a rear wheel axle support section 42 that supports the rear wheel axle 81. Moreover, the internal combustion engine 40 is a unit swing type internal combustion engine that is pivotably supported with respect to the body frame 60 so as to be capable of swinging along with the rear wheel 80.

The luggage storage box 100 has a front wall section 100F, a side wall section 100S and a rear wall section 100R.

The front wall section 110F is positioned, when the motorcycle 10 is viewed from the side surface thereof, beneath a front end section 201F of the seat 200. In addition, the front wall section 100F is positioned, when the motorcycle 10 is viewed from the side surface thereof, above the cylinder head 41. Moreover, the internal combustion engine 40 is mounted on the body frame 60 such that an axis line L2 of the cylinder head 41 extends substantially in the horizontal direction.

The rear wall section 100R is positioned, when the motorcycle 10 is viewed from the side surface thereof, further to the rear than the rear wheel axle 81.

### (2) Structure of the luggage storage compartment and the vicinity around the luggage storage compartment

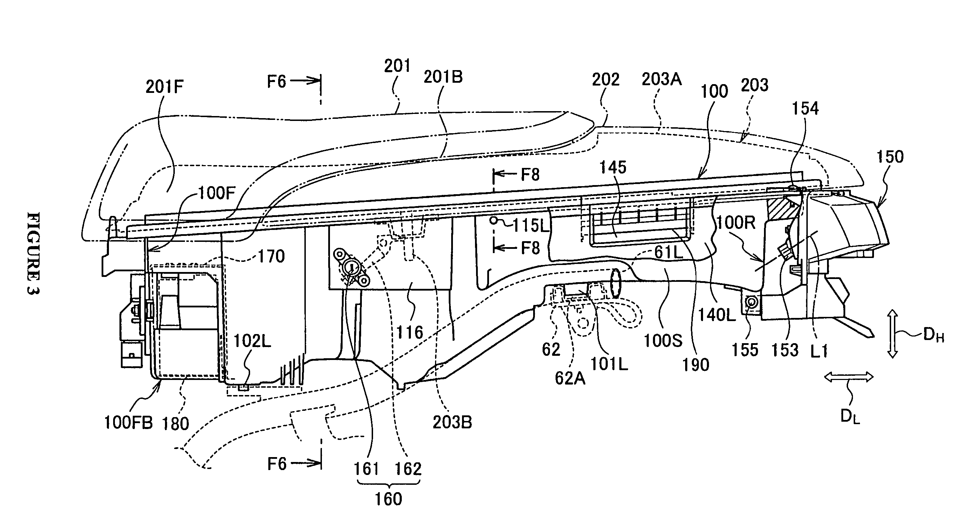

Next, the structure of the luggage storage box 100 (the luggage storage compartment) that is a key section of this embodiment of the invention, and the vicinity around the luggage storage box 100 will be explained with reference to FIG. 3 to FIG. 5.

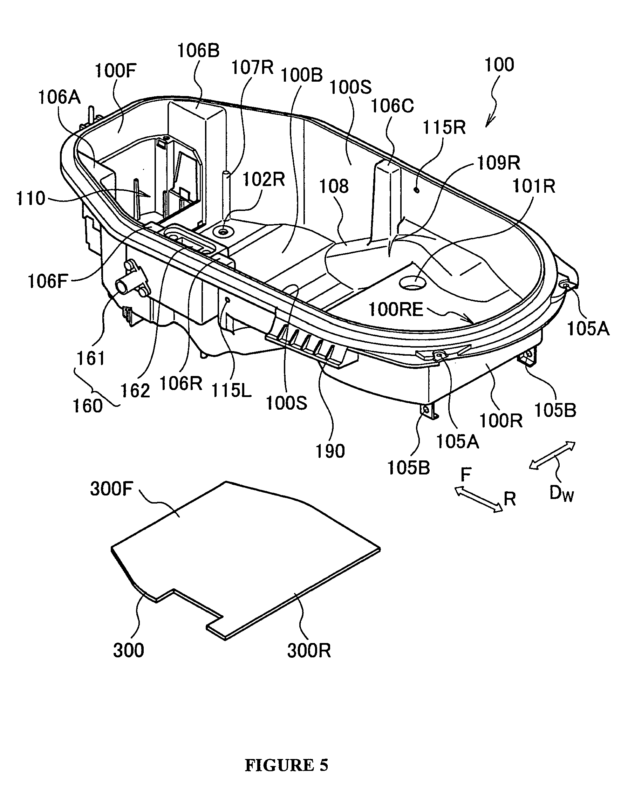

FIG. 3 is a left side view of the luggage storage box 100. Fig. 4 is a plan view (a top view) of the luggage storage box 100. Fig. 5 is a perspective view of the luggage storage box 100.

### (2.1) Seat Connection

The luggage storage box 100, as described previously, includes the front wall section 100F, the side wall section 100S, and the rear wall section 100R. In addition, the luggage storage box 100 has a bottom surface 100B. More specifically, the luggage storage box 100 has a long box shape with an open upper section.

Moreover, in the present embodiment, the luggage storage box 100 is formed using synthetic resin material (polypropylene).

The luggage storage box 100 with the open upper section as described above is connected to the seat 200 by seat hinges 120, 130.

The seat 200 is structured by a seat cushion 201, a seat cover 202 and a bottom plate 203.

The seat hinges 120, 130 are connected to the seat 200 and the side wall section such that the seat 200 is capable of being opened and closed. More specifically, the seat 200 is a "sideways opening" type seat, that is opened and closed by making a center on the seat hinges 120, 130 provided on a right side surface of the motorcycle 10. Note that, the specific structure of the seat hinges 120, 130 will be explained hereinafter.

### (2.2) Fixing to the body frame

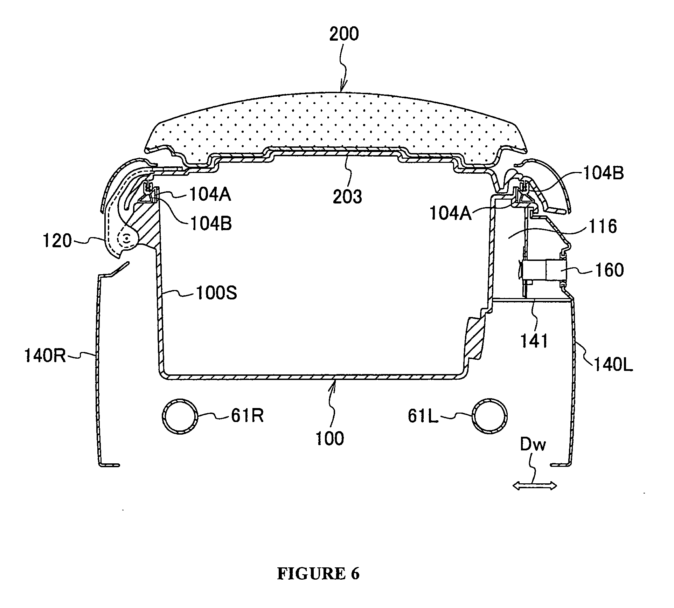

As described previously, the luggage storage box 100 is supported by the body frame 60. More concretely, the body frame 60 has seat rails 61L, 61R (although the seat rail 61L is not shown in FIG. 3 to FIG. 5, refer to FIG. 6) that extend in the vehicle length direction D_{L}.

In addition, the body frame 60 has cross member 62 that connects the seat rails 61L, 61R and that extends in the vehicle width direction D_{W}.

The cross member 62 has a predetermined thickness in the vehicle height direction D_{H}, and is provided with a recess 62A that receives an attachment protrusion 101L provided on the luggage storage box 100.

The attachment protrusion 101L protrudes downwards from the bottom surface 100B of the luggage storage box 100, and is inserted in the recess 62A. The attachment protrusion 101L inserted in the recess 62A is fixed by a bolt 63 to the cross member 62.

Note that, in the present embodiment, an attachment protrusion 101R (refer to FIG. 5) is provided that has the same shape as the attachment protrusion 101L. The attachment protrusion 101R is also fixed to the cross member 62 via a recess that has the same shape as the recess 62A.

In addition, in the present embodiment, in addition to the attachment protrusions 101L, 101R, the luggage storage box 100 is fixed to the seat rails 61L, 61R by attachment protrusions 102L, 102R.

### (2.3) Attachment of the Tail Lamp Unit

The tail lamp unit 150 is attached to the rear wall section 100R of the luggage storage box 100. More specifically, the tail lamp unit 150 is attached to the rear wall section 100R of the luggage storage box 100 by an attachment tab 105B and an attachment hole 105A provided on/in the luggage storage box 100. Note that, in the present embodiment, the attachment hole 105A and the attachment tab 105B structure a tail lamp unit support section that supports the tail lamp unit 150.

More particularly, the tail lamp unit 150 is fixed to the luggage storage box 100 by a screw 154 that is screwed into the attachment hole 105A. In addition, the tail lamp unit 150 is fixed by a screw 155 that is screwed into an attachment hole (not shown) provided in the attachment tab 105B.

The rear wall section 100R has a shape that covers the area above the tail lamp unit 150 when the motorcycle 10 is viewed from the side surface thereof. More particularly, the luggage storage box 100 is formed to extend above the tail lamp unit 150, thus forming an area in which luggage can be stored (the area marked with diagonal lines in FIG. 3).

Moreover, the tail lamp unit 150, as described previously, includes the brake lamp unit 151 and the pair of flasher lamp units 152L, 152R that are positioned to the outside from the brake lamp unit 151 in the vehicle width direction.

The rear end of the tail lamp unit 150 is formed with a curved section C that curves to form a protruding section pointing in the rearward direction of the vehicle when the motorcycle 10 is viewed in a plan view. More particularly, the flasher lamp units 152L, 152R, in the plan view of the motorcycle 10 (refer to FIG.4), are positioned forward from the brake lamp unit 151 so as to form the curved section C. In addition, the rear end section 100RE of the luggage storage box 100 has a shape that extends along the curved section C when the motorcycle 10 is viewed in the plan view.

Furthermore, the flasher lamp units 152L, 152R have bulbs 153. An axis line L1 of the bulbs 153 extends forwards and downwards when the motorcycle 10 is viewed from the side surface thereof (refer to FIG. 3).

### (2.4) Seat Lock

As described above, the seat lock 160 is attached to the luggage storage box 100. The seat lock 160 locks (securely shuts) the seat 200 that is opened and closed by making a center on the seat hinges 120, 130.

More specifically, the seat lock 160 is attached to the side wall section 100S. The seat lock 160 includes a key cylinder 161 into which a key is inserted; and a lock mechanism 162 that engages with a striker 203B so provided on a bottom plate 203 that the seat 200 does not open.

The seat lock 160 is stored in a seat lock storage area 116 that is formed in the luggage storage box 100.

### (2.5) Battery Mounting Section

The luggage storage box 100 has a battery mounting section 110 on which a battery 180 is mounted. More specifically, the battery mounting section 110 is provided on a front section bottom surface 100FB of the luggage storage box 100.

The battery 180 mounted on the battery mounting section 110 is covered within the inside of the luggage storage box 100 by a battery cover 170 (refer to FIG. 3 and FIG. 4) . Note that, the specific shape of the battery cover 170 will be described hereinafter.

### (2.6) Load bearing sections

The luggage storage box 100 is provided with a plurality of load bearing sections that bear load applied to the seat 200.

More particularly, load bearing sections 106A, 106B are provided on the front wall section 100F, and a load bearing section 106C is provided on the right side side wall section 100S (refer to FIG. 5). In addition, a load bearing section 106F is provided forward from the seat lock 160, and a load bearing section 106R is provided to the rear from the seat lock 160.

Note that, the side wall section 100S is positioned further to the outside in the vehicle width direction that the load bearing sections 106A to 106C, 106F, and 106R (refer to FIG. 4 and FIG. 5).

### (2.7) Partition Board Support Protrusions and Partition Board Support Structure

In order to partition the storage space, the luggage storage box 100 has, for example, a partition board 300 as shown in FIG. 5. The partition board 300 can be made by using synthetic resin, a veneer board or the like. Note that, the partition board 300 may be supplied as a standard accessory or as an optional accessory of the motorcycle 10, or may be made by the user of the motorcycle 10 himself/herself.

The luggage storage box 100 has partition board support protrusions 107L, 107R that support the partition board 300. More particularly, the partition board 300 partitions the luggage storage box 100 in the upward/downward direction such that a front end section 300F is mounted on the partition board support protrusions 107L, 107R.

The partition board support protrusions 107L, 107R are formed to extend along the side wall section 100S from the bottom surface 100B of the luggage storage box 100. In addition, a rear end section 300R of the partition board 300 abuts with an inclined surface section 108 of the luggage storage box 100 so as to partition the luggage storage box 100 in the upward/downward direction.

Moreover, the luggage storage box 100 has partition board support grooves 109L, 109R in which a partition board like the partition board 300 can be inserted. If a partition board like the partition board 300 is inserted in the partition board support grooves 109L, 109R, the luggage storage box 100 can be partitioned in the front/back direction.

### (3) Cross Sectional Shape of the Luggage Storage Compartment

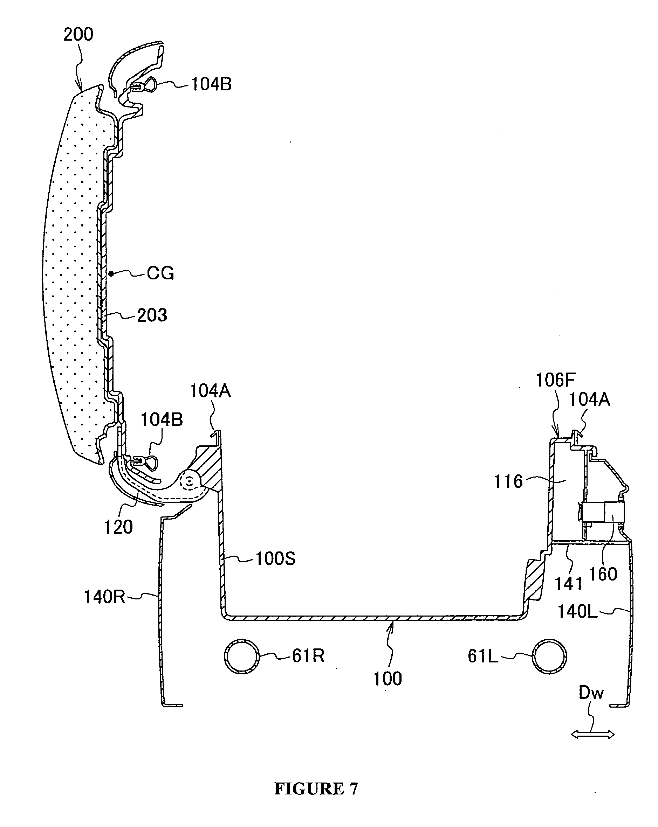

Next, the cross sectional shape of the luggage storage box 100 will be explained with reference to FIG. 6 and FIG. 7. Note that, FIG. 6 is a cross sectional view of the luggage storage box 100 when the seat 200 is closed, and FIG. 7 is a cross sectional view of the luggage storage box 100 when the seat 200 is open having been rotated open around the seat hinge 120 (and the seat hinge 130).

As is apparent from FIG. 6 and FIG. 7, the side wall section 100S is portioned further to the outside in the vehicle width direction than the seat rails 61L, 61R that structure the body frame 60. The seat rails 61L, 61R are positioned side by side in the vehicle width direction D_{W}.

In addition, the load bearing section 106F (106R) is provided forward (rearward) from the seat lock 160 stored in the seat lock storage area 116 as described previously. Moreover, the load bearing section 106F (106R) is located above the body frame 60, and more specifically, above the seat rail 61L, when viewed in a cross section along the vehicle width direction D_{W}.

A rubber seal 104A is provided in an upper edge outer periphery section of the luggage storage box 100. Further, a rubber seal 104B is provided in an outer periphery section of the seat 200 (more particularly, at the bottom plate 203) .

The rubber seal 104A has an upper portion that has a bent-back section that presses against the rubber seal 104B when the seat 200 is closed.

In addition, the bottom plate 203, as compared to bottom plates used with seats known in the art, has a shape that is substantially flat and that is not formed with any large ribs or the like on the surfaces of the luggage storage box 100 side.

Furthermore, as can be seen from FIG. 7, the center of gravity CG of the open seat 200 is offset substantially to the outer side in the vehicle width direction from the seat rail 61R.

### (4) Attached State of Side Cover

Next, the attached state of the side cover 140L that is attached to the side surface of the luggage storage box 100, more specifically, the side wall section 100S on the left side thereof, will be explained. Note that, the side cover 140R is attached to the luggage storage box 100 using the same method as is used for the side cover 140L.

The side cover 140L shown in FIG. 1, FIG. 6 and FIG. 7 is attached to the side wall section 100S on the left side of the luggage storage box 100. More specifically, the side cover 140L is attached to the side wall section 100S on the left side using a side cover attachment hole 115L (refer to FIG. 3 and FIG. 5) provided in the side wall section 100S on the left side. Note that, the side cover 140R is attached to the side wall section 100S on the right side using a side cover attachment hole 115R (refer to FIG. 5) provided in the side wall section 100S on the right side.

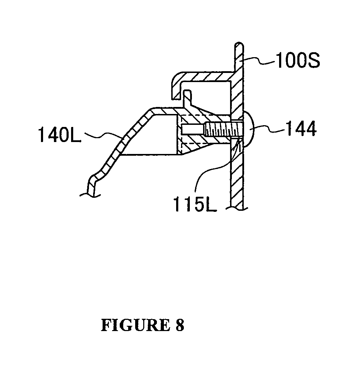

It should be noted that FIG. 8 is a cross sectional view along the direction of the F8-F8 line shown in FIG. 3. As can be seen from FIG. 8, the side cover 140L is fixed to the side wall section 100S by a screw 144 that is inserted through the side cover attachment hole 115L from the inside of the luggage storage box 100.

In addition, as shown in FIG. 1, FIG. 6 and FIG. 7, a cover panel 141 is formed in the side cover 140L. The cover panel 141 is a tabular protrusion formed on the inside surface of the side cover 140L, namely, the surface that faces the side wall section 100S of the luggage storage box 100.

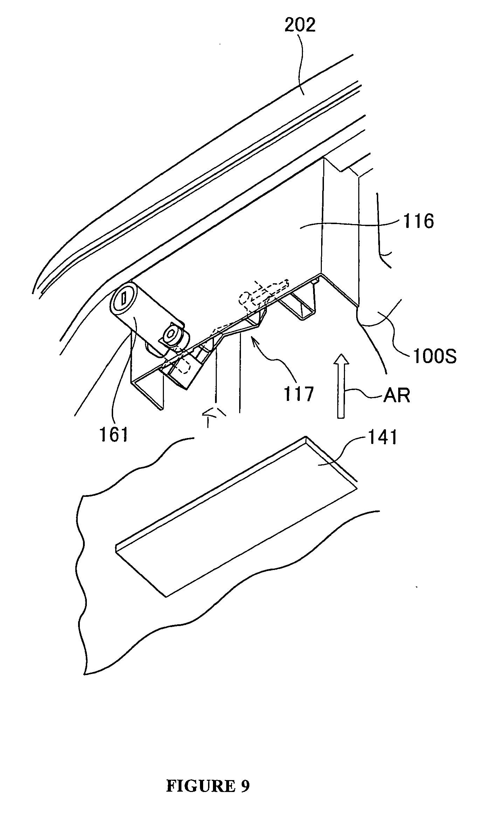

Note that, Fig. 9 is a perspective view looking diagonally downwards on the seat lock storage area 116. As can be seen in FIG. 9, the cover panel 141 is disposed at a position at which it covers an opening 117 formed in a lower section of the seat lock storage area 116.

As will be apparent from the previous description, the cover panel 141 is structured so as to cover the opening 117 when the side cover 140L is fixed to the side wall section 100S by the screw 144 (the cover panel 141 is moved in the direction indicated by the AR arrow).

Further, as shown in FIG. 3, the side cover 140L is provided with an access hole 145 that allows the standing handle 190 to be gripped when the rider uses the stand 70 to stand the motorcycle 10 upright.

### (5) Structure of the Seat

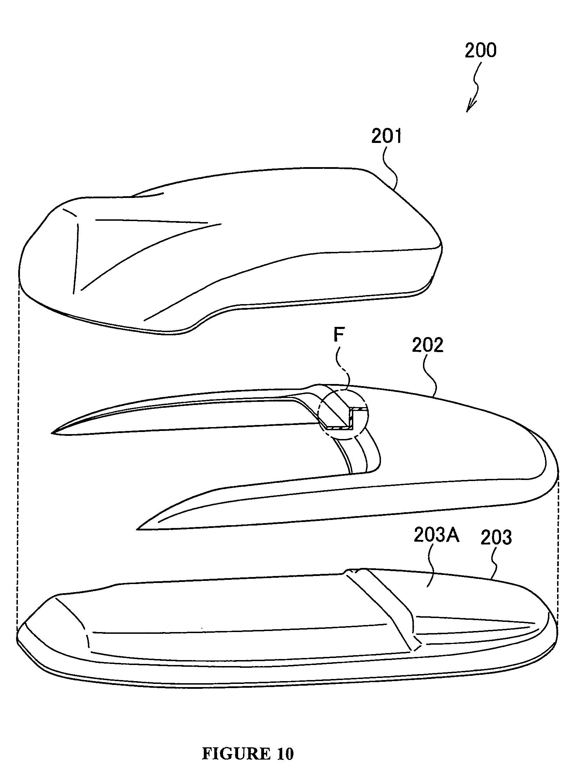

Fig. 10 is a diagram showing the structure of the seat 200. As can be seen in FIG. 10, the seat 200 is structured by the seat cushion 201, the seat cover 202, and the bottom plate 203.

The seat cushion 201 has a mounting surface 201C on which the rider sits. The seat cover 202 is contiguous with the seat cushion 201 and structures an outer surface. The seat cover 202 is formed from the same material as the side cover 140L and the like, and is coated in the same manner as the side cover 140L and the like. Note that, the area inside the circular frame F shows the cross sectional shape of the seat cover 202 at the central position of the motorcycle 10 in the vehicle width direction.

The bottom plate 203 is attached to the surface on the opposite side from the mounting surface 201C. The bottom plate 203 extends further to the rear than the seat cushion 201 when the motorcycle 10 is viewed from the side surface thereof.

In addition, as shown in FIG. 3, the bottom plate 203 has a section that is positioned further upward than a bottom surface 201B of the seat cushion 201 at the rear section of the bottom plate 203. More specifically, a rear section upper surface 203A is positioned further upward than the bottom surface 201B.

### (6) Structure of a Hinge Section

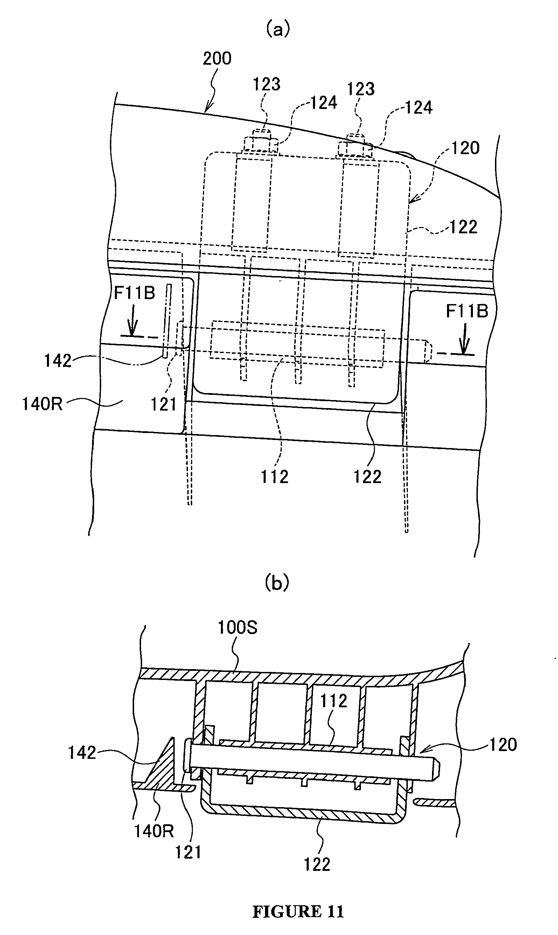

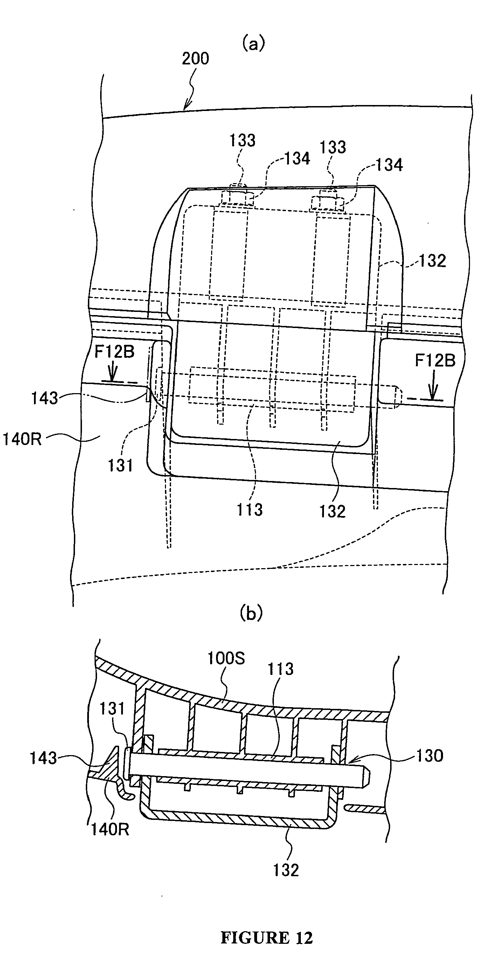

Next, the structure of the seat hinges 120, 130 that structure a hinge section of the present embodiment will be explained while referring to FIG. 11(a) and (b) and FIG. 12 (a) and (b).

FIG. 11 (a) is a view along the direction of the arrow F11A shown in FIG. 4. Further, FIG. 11(b) is a cross sectional view along the direction of line F11B - F11B shown in FIG. 11 (a) .

FIG. 12(a) is a view along the direction of the arrow F12A shown in FIG. 4. Further, FIG. 12(b) is a cross sectional view along the direction of line F12B - F12B shown in FIG. 12(a).

As shown in FIG. 12(a) and (b), the seat hinge 120 is structured by a hinge pin 121 and a hinge plate 122. Further, the seat hinge 120 is positioned further to the outside in the vehicle width direction than the side wall section 100S.

The hinge pin 121 is inserted through a through hole (not shown) provided in a hinge pin support section 112 and the hinge plate 122 extending from the side wall section 100S. More specifically, the through hole is provided in the hinge plate 122.

The hinge plate 122 is a metal plate, and rotates around the hinge pin 121 section. Further, the hinge plate 122 is fixed to the seat 200 (more specifically, the bottom plate 203) by a bolt 123 and a nut 124 that are inserted when the bottom plate 203 is formed.

In addition, the side cover 140R is formed with a wall section 142 that inhibits the hinge pin 121 from dropping off from the hinge pin support section 112 and the hinge plate 122 as a result of movement in the forward-back direction.

As can be seen from FIG. 12(a) and (b), the seat hinge 130 has substantially the same structure as the seat hinge 120. The seat hinge 130 is structured by a hinge pin 131, a hinge plate 132, a screw 133, and a nut 134. The seat hinge 130 is also positioned further to the outside in the vehicle width direction than the side wall section 100S.

The hinge pin 131, like the hinge pin 121, is inserted through a through hole (not shown) provided in a hinge pin support section 113 and the hinge plate 132 extending from the side wall section 100S. More specifically, the through hole is provided in the hinge plate 132.

In addition, the side cover 140R is formed with a wall section 143 that inhibits the hinge pin 131 from dropping off from the hinge pin support section 113 and the hinge plate 132 as a result of movement in the forward-back direction.

### (7) Shape of the Battery Cover

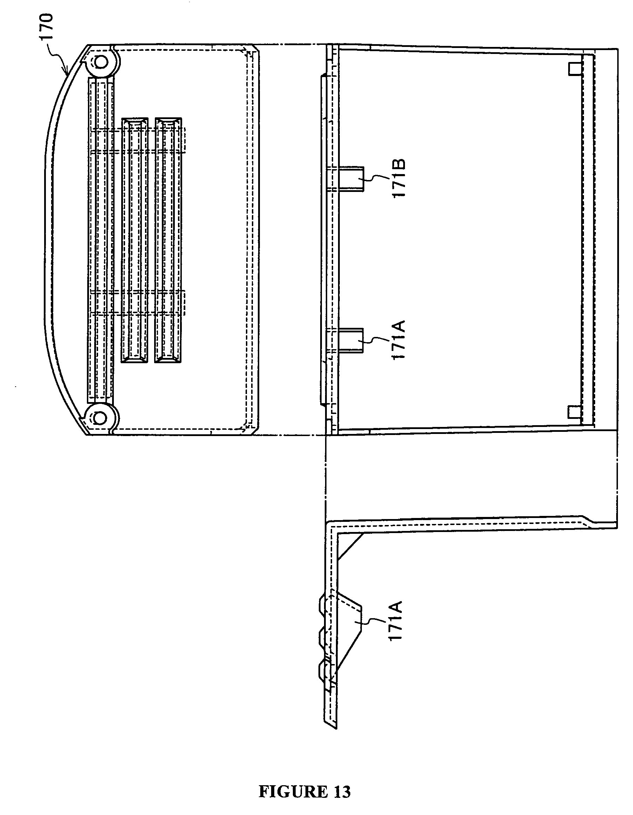

FIG. 13 includes a plan view (a top view), a front view and a side view of the battery cover 170 attached to the battery mounting section 110 of the luggage storage box 100.

Referring to FIG. 13, the battery cover 170 has an inverted L-shaped side surface shape, with a battery retainer 171A formed on the under side of the top surface thereof. The battery retainer 171A retains the battery 180 that is mounted on the battery mounting section 110.

The battery retainer 171A protrudes downwards from the under side of the top surface of the battery cover 170 and pushes against an upper section of the battery 180.

### (Examples of Use of the Luggage Storage Compartment)

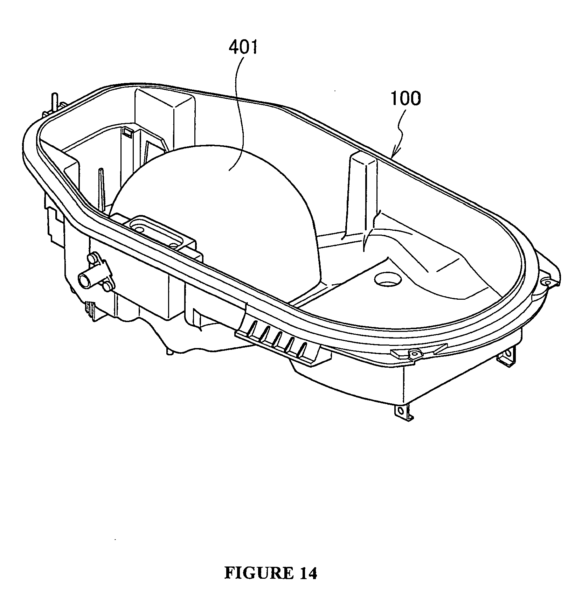

Next, examples of the luggage storage box 100 (luggage storage compartment) in use will be explained with reference to FIG. 14 to FIG. 16.

As shown in FIG. 14, because a front section of the luggage storage box 100 has ample depth, a piece of luggage that has a certain height, such as a helmet 401, can be stored therein.

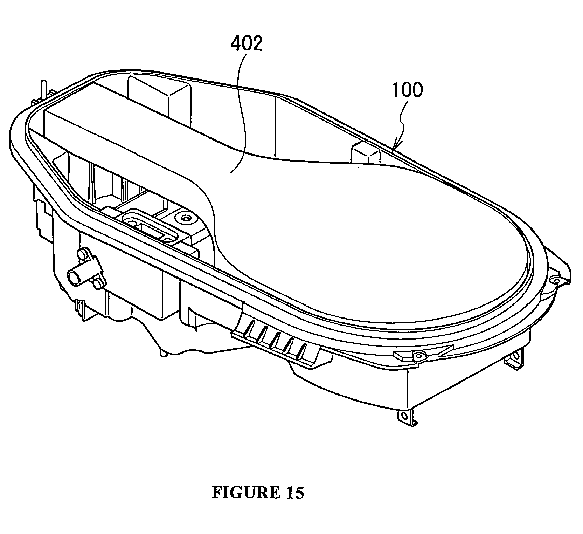

In addition, because the luggage storage box 100 has ample length in the vehicle length direction D_{L} as shown in FIG. 15, a piece of long luggage such as a tennis racquet 402 can be stored therein.

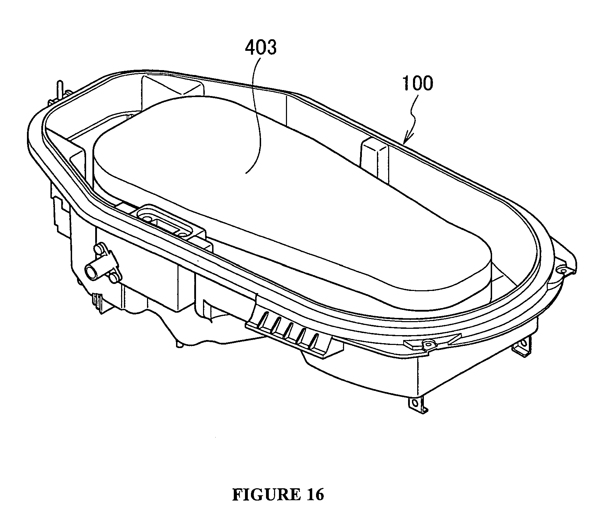

Moreover, as shown in FIG. 16, because the luggage storage box 100 has a constant degree of width and depth throughout, a piece of luggage that has a certain degree of width and height such as a ukulele 403 can be stored therein.

According to the motorcycle 10 according to the present embodiment as described above, the front wall section 100F is positioned downward from the front end section 201F of the seat 200 (the seat cushion 201) when the motorcycle 10 is viewed from the side surface thereof. Accordingly, the structure does not impair the function of the motorcycle 10 as a scooter straddle-type vehicle that allows the rider to place both feet on a flat floor panel.

In addition, the side wall section 100S of the luggage storage box 100 is positioned further to the outside in the vehicle width direction than the body frame 60 (the seat rails 61L, 61R), and the rear wall section 100R is positioned further to the rear than the rear wheel axle 81 when the motorcycle 10 is viewed from the side surface thereof. As a result, the size of the luggage storage box 100 can be enlarged within a constrained vehicle size.

More specifically, because the rear wall section 100R is positioned further to the rear than the rear wheel axle 81, the shape of the luggage storage box 100 can be formed to extend downwards in accordance with the shape of the rear wheel 80. Thus, it is possible to ensure ample depth of the luggage storage box 100 at the section to the rear of the rear wheel axle 81.

According to the motorcycle 10, the bulbs 153 of the tail lamp unit 150 face forward and downward when the motorcycle 10 is viewed from the side surface thereof. Thus, as compared to a structure in which the bulbs 153 are positioned substantially horizontally, the capacity of the luggage storage box 100, and in particular the size of the luggage storage box 100 in the vehicle length direction D_{L}, can be enlarged even more, without having to narrow the storage space of the luggage storage box 100.

According to the motorcycle 10, the seat hinges 120, 130 are positioned further to the outside in the vehicle width direction than the side wall section 100S. As a result, the capacity of the luggage storage box 100, and in particular the size of the luggage storage box 100 in the vehicle width direction D_{W}, can be enlarged even more.

According to the motorcycle 10 it is easy to increase the rigidity of the seat 200 because the seat 200 is structured from three components, namely, the seat cushion 201, the seat cover 202, and the bottom plate 203.

According to the motorcycle 10, the side wall section 100S of the luggage storage box 100 is positioned further to the outside in the vehicle width direction than the load bearing sections 106F, 106R and the like. As a result, the capacity of the luggage storage box 100, and in particular the size of the luggage storage box 100 in the vehicle width direction D_{W}, can be enlarged even more.

According to the motorcycle 10, at the rear section of the bottom plate 203, the bottom plate 203 (the rear section upper surface 203A) is positioned further upward than the bottom surface 201B of the seat cushion 201. As a result, the capacity of the luggage storage box 100, and in particular the depth of the rear section of the luggage storage box 100, can be enlarged even further.

According to the motorcycle 10, the partition board support protrusions 107L, 107R are provided on which the partition board 300, which partitions the luggage storage box 100 in the upward/downward direction, is mounted. As a result, the luggage storage box 100 can be easily partitioned in the upward/downward direction using a simple structure whilst ensuring necessary strength.

According to the motorcycle 10, the seat lock 160 is attached to the luggage storage box 100 (the side wall section 100S) that is formed from synthetic resin material. Thus, there is no need to use a component such as a metal made bracket to fix the seat lock 160, which in turn allows weight reduction and reduction of the manufacturing costs of the motorcycle 10 to be promoted.

According to the motorcycle 10, the cross member 62 has a predetermined thickness in the vehicle height direction D_{H}, and is provided with the recess 62A that receives the attachment protrusions 101L, 101R. Thus, the capacity of the luggage storage box 100, and in particular the depth of the luggage storage box 100, can be enlarged still further.

According to the motorcycle 10, the load bearing sections 106F, 106R are positioned upward ward from the seat rail 61L when viewed in cross section along the vehicle width direction D_{W}. Accordingly, the rigidity of the load bearing sections 106F, 106R that bear substantial load can be increased.

According to the motorcycle 10, the battery mounting section 110 is provided on the front section bottom surface 110FB of the luggage storage box 100. Thus, the area above the battery mounting section 110 can be utilized as a storage space of the luggage storage box 100.

According to the motorcycle 10, the front wall section 100F of the luggage storage box 100 is positioned upward ward from the cylinder head 41 when the motorcycle 10 is viewed from the side surface thereof. Further, the rear wall section 100R of the luggage storage box 100 is positioned further to the rear than the rear wheel axle 81 in the vehicle length direction D_{L}.

More specifically, the internal combustion engine 40 has an external shape that is low in terms of height in the vehicle height direction D_{H}, and that is long in the vehicle length direction D_{L}. Accordingly, the space above the internal combustion engine 40 can be effectively utilized as a space for providing the luggage storage box 100.

According to the motorcycle 10, since the fuel tank 50 is positioned beneath the footboard 30, the space above the internal combustion engine 40 described above is not made narrower.

According to the motorcycle 10, the cylinder head 41 is positioned immediately to the rear side of the fuel tank 50. Accordingly, when the internal combustion engine 40 that has the external shape that is long in the vehicle length direction D_{L} is used, the overall length of the motorcycle 10 does not become long.

According to the motorcycle 10, the center of gravity CG of the seat 200 is offset substantially further to the outer side in the vehicle width direction than the seat rail 61R. Thus, even if the optional side stand is attached, the seat 200 does not close by itself when the side stand is being used.

According to the motorcycle 10, the wall sections 142, 143 are formed that inhibit the hinge pins 121, 131 from dropping off. Further, the side cover 140R is fixed from the inside of the luggage storage box 100 by the screw 144, and the hinge pins 121, 131 cannot be removed unless the seat is opened. As a result, it is possible to inhibit theft of the luggage stored in the luggage storage box 100.

According to the motorcycle 10, the battery cover 170 is formed with the battery retainer 171A and a battery retainer 171B. As a result, the battery 180 can be retained without using any separate components.

According to the motorcycle 10, since the opening 117 of the seat lock storage area 116 is covered by the cover panel 141, theft of the luggage stored in the luggage storage box 100 can be inhibited with an even greater degree of surety.

The characteristics of the invention have been disclosed using one embodiment of the invention as described above. However, it is to be understood that the description and drawings that form one part of this disclosure do not limit the invention. Accordingly, it will be apparent to those skilled in the art that various other alternative embodiments can be devised based upon the above disclosure.

For example, the tail lamp unit 150, the seat lock 160, and the like, do not need to be attached to the luggage storage box 100. Further, the structure of the seat 200, the seat hinges 120, 130, and the like, are just one example thereof, and structures that are different to those in the above described embodiment may be used.

The technical scope of the invention is only limited by the characteristics of the patent claims.

### Description of the Reference Numerals and Signs

10 ... motorcycle, 20 ... front wheel, 30 ... footboard, 40 ... internal combustion engine, 41 ... cylinder head, 42 ... rear wheel axle support section, 50 ... fuel tank, 60 ... body frame, 61L, 61R ... seat rail, 62 ... cross member, 62A ... recess portion, 63 ... bolt, 70 ... stand, 80 ... rear wheel, 81 ... rear wheel axle, 100 ... luggage storage box, 100B ... bottom surface, 100F ... front wall section, 100FB ... front section bottom surface, 100R ... rear wall section, 100RE ... rear end section, 100S ... side wall section, 101L, 101R, 102L, 102R ... attachment protrusions, 104A, 104B ... rubber seal, 105A ... attachment holes, 105B ... attachment tab, 106A - 106C, 106F, 106R ... load bearing section, 107L, 107R ... partition board support protrusions, 108 ... inclined surface section, 109L, 109R ... partition board support groove, 110 ... battery mounting section, 112, 113 ... hinge pin support section, 115L, 115R ... side cover attachment hole, 116 ... seat lock storage area, 117 ... opening, 120, 130 ... seat hinge, 121, 131 ... hinge pin, 122, 123 ... hinge plate, screw ... 123, 133, 124, 14 ... nut, 140R, 140L ... side cover, 141 ... cover panel, 142, 143 ... wall section, 144 ... screw, 145 ... access hole, 150 ... tail lamp unit, 151 ... brake lamp unit, 152L, 152R ... flasher lamp unit, 153 ... bulb, 154, 155 ... screw, 160 ... seat lock, 161 ... key cylinder, 162 ... lock mechanism, 170 ... battery cover, 171A, 171B ... battery retainer, 180 ... battery, 190 ... standing handle, 200 ... seat, 201 ... seat cushion, 201F ... front end section, 201B ... bottom surface, 201C ... mounting surface, 202 ... seat cover, 203 ... bottom plate, 203A ... rear section upper surface, 203B ... striker, 300 ... partition board, 300F ... front end section, 300R ... rear end, 401 ... helmet, 402 ... tennis racquet, 403 ... ukulele case, C ... curved section, CG ... center of gravity, D_{H} ... Vehicle height direction, D_{L} ... Vehicle length direction, D_{W} ... Vehicle width direction, L1, L2 ... axis line

## Claims

1. A straddle-type vehicle (10) comprising a body frame (60), a seat (200), a luggage storage compartment (100) that is provided beneath the seat (200), a tail lamp unit (150) that is disposed at a rear section of the straddle-type vehicle and a rear wheel axle (87), wherein: the luggage storage compartment has a front wall section (100F), at least one side wall section (100S), and a rear wall section (100R); the front wall section (100F) is positioned beneath a front end section of the seat (201 F) when the straddle-type vehicle is viewed from the side, and: (a) at least a portion of the at least one side wall section (100S) is positioned at least as far to the outside in a vehicle width direction (Dw) as the body frame (60); and (b) at least a portion of the rear wall section (100R) is positioned at least as far to the rear as the rear wheel axle (87) when the straddle-type vehicle is viewed from the side; **characterized in that**, at least a portion of the luggage storage compartment is formed directly upward from the tail lamp unit (150) such that it extends directly above the tail lamp unit (150) and a rear wall section (100R) of the luggage storage box (100) covers an area directly above the tail lamp unit (150) when the vehicle is viewed from the side surface thereof.

2. The straddle-type vehicle according to claim 1, wherein:
the luggage storage compartment has a tail lamp unit support section (105a) that supports a tail lamp unit.

3. The straddle-type vehicle according to claim 2, wherein:
a curved section (C), that curves to form a protruding section that points, when the straddle-type vehicle is viewed in a plan view, in a vehicle rearward direction, is formed in a rear end of the tail lamp unit; and
a rear end section (100RE) of the luggage storage compartment has a shape that extends along the curved section when the straddle-type vehicle is viewed in the plan view.

4. The straddle-type vehicle according to claim 3, wherein:
the tail lamp unit has a brake lamp unit (151) and a pair of flasher lamp units (152L, 152R) that are positioned to the outer sides in the vehicle width direction from the brake lamp unit; and
the pair of flasher lamp units form a curved section as a result of being positioned further forward than the brake lamp unit when the straddle-type vehicle is viewed in the plan view.

5. The straddle-type vehicle according to claim 4, wherein:
the flasher lamp units have a bulb (153); and
an axis line (L1) of the bulb extends forwards and downwards when the straddle-type vehicle is viewed from the side surface thereof.

6. The straddle-type vehicle according to any of the preceding claims, further comprising:
a hinge section (120, 130) that connects the seat and a side wall section such that the seat can be opened and closed.

7. The straddle-type vehicle according to claim 6, wherein:
the hinge section is positioned further to the outside in the vehicle width direction than the side wall section.

8. The straddle-type vehicle according to claim 6 or 7, wherein the seat includes:
a seat cushion (201) that has a mounting surface (201 C) on which the rider sits;
a bottom plate (203) that is attached to a surface that is on the opposite side of the seat cushion to the mounting surface; and
a seat cover (202) that is contiguous with the seat cushion and that defines an outer surface.

9. The straddle-type vehicle according to claim 6, 7 or 8, wherein:
the luggage storage compartment includes a load bearing section (106F, 106R) that bears load applied to the seat.

10. The straddle-type vehicle according to claim 9, wherein:
an adjacent portion of the side wall section is positioned further to the outside in the vehicle width direction than the load receiving section.

11. The straddle-type vehicle according to claim 8, wherein:
the bottom plate extends further to the rear than the seat cushion when the straddle-type vehicle is viewed from the side; and
the bottom plate is provided with a section that is positioned further upward than a bottom surface (201 B) of the seat cushion at a rear section of the bottom plate.

12. The straddle-type vehicle according to claim 9 or 10, further comprising:
a seat lock (160) that locks the seat that can be opened and closed by making a centre on the hinge section; and
the load bearing section is positioned to the front and the rear of the seat lock.

13. The straddle-type vehicle according to claim 12, wherein:
among the sections of the luggage storage compartment, at least the side wall sections comprise synthetic resin material; and
the seat lock is attached to a side wall section.

14. The straddle-type vehicle according to any of the preceding claims, wherein:
the luggage storage compartment has a partition board support protrusion (107L, 107R) on which a front end (300F) of a partition board (300), which partitions the luggage storage compartment in an upward-downward direction, is mounted; and
the partition board support protrusion is formed to extend along a side wall section from a bottom surface of the luggage storage compartment.

15. The straddle-type vehicle according to any of the preceding claims, wherein:
the luggage storage compartment has an attachment protrusion (101 L, 101 R) that is fixed to the body frame and that protrudes downwards from the bottom surface of the luggage storage compartment; and
the body frame has a predetermined thickness in the vehicle height direction (D_{H}) and has a recess (62A) that receives the attachment protrusion.

16. The straddle-type vehicle according to claim 15, wherein the body frame includes:
two seat rails (61 L, 61 R) that extend in the vehicle length direction (D_{L}) and that are positioned side by side in the vehicle width direction (D_{W}); and
a cross member (62) that extends in the vehicle width direction and that connects the seat rails, wherein:
the recess is formed in the cross member.

17. The straddle-type vehicle according to any of the preceding claims, wherein:
the luggage storage compartment is provided with a load bearing section (106F, 106R) that bears load applied to the seat; and
the load bearing section is positioned above the body frame.

18. The straddle-type vehicle according to any of the preceding claims, wherein:
the luggage storage compartment has a battery mounting section (110) on which a battery (180) is mounted; and
the battery mounting section is provided on a bottom surface of a front section (100FB) of the luggage storage compartment.

19. A straddle-type vehicle according to claim 1, comprising an internal combustion engine (40) which has a cylinder head (41) and is mounted on the body frame such that an axis line (L2) of the cylinder head extends in a substantially horizontal direction, wherein:
the front wall section is positioned above the cylinder head when the straddle-type vehicle is viewed from the side

20. The straddle-type vehicle according to claim 19, wherein:
the internal combustion engine has a rear wheel axle support section (42) that supports the rear wheel axle, and is a unit swing type internal combustion engine that is pivotably supported with respect to the body frame such that the internal combustion engine is capable of swinging along with a rear wheel (80).

21. The straddle-type vehicle according to claim 20, comprising:
a fuel tank (50) that stores fuel that is supplied to the internal combustion engine; and
a footboard (30) on which a rider can place his/her feet, wherein:
the fuel tank is positioned beneath the footboard.

22. The straddle-type vehicle according to claim 20 or 21, wherein:
the cylinder head is positioned to the rear of the fuel tank.

23. The straddle-type vehicle according to any of the preceding claims, wherein:
the luggage storage compartment is provided with a standing handle (190) that a rider holds when he stands the straddle-type vehicle up on a stand (70).

24. The straddle-type vehicle according to claim 23, comprising:
a side cover (140L) that covers an outer side surface of the luggage storage compartment from the outer side in the vehicle width direction, wherein:
the side cover is provided with an access hole (145) that allows the standing handle to be held.

25. The straddle type vehicle according to any of the preceding claims, wherein the at least one side wall section is positioned further to the outside in a vehicle width direction than the body frame.

26. The straddle type vehicle according to any of the preceding claims, wherein the rear wall section is positioned further to the rear than the rear wheel axis.

## Patentansprüche

1. Grätschsitz-Fahrzeug (10), das aufweist: ein Karosseriegerippe (60); einen Sitz (200); einen Stauraum (100), der unterhalb des Sitzes (200) vorhanden ist; eine Schlussleuchteneinheit (150), die in einem hinteren Abschnitt des Grätschsitz-Fahrzeuges angeordnet ist; und eine Hinterradachse (87), wobei der Stauraum einen vorderen Wandabschnitt (100F), mindestens einen Seitenwandabschnitt (100S) und einen hinteren Wandabschnitt (100R) aufweist; der vordere Wandabschnitt (100F) unterhalb eines vorderen Endabschnittes des Sitzes (201F) positioniert ist, wenn das Grätschsitz-Fahrzeug von der Seite betrachtet wird; und (a) mindestens ein Teil des mindestens einen Seitenwandabschnittes (100S) mindestens so weit nach außen in einer Breitenrichtung (Dw) des Fahrzeuges positioniert ist wie das Karosseriegerippe (60) und (b) mindestens ein Teil des hinteren Wandabschnittes (100R) mindestens so weit nach hinten positioniert ist wie die Hinterradachse (87), wenn das Grätschsitz-Fahrzeug von der Seite betrachtet wird; **dadurch gekennzeichnet, dass** mindestens ein Teil des Stauraumes direkt nach oben von der Schlussleuchteneinheit (150) ausgebildet ist, so dass er sich direkt über der Schlussleuchteneinheit (150) erstreckt, und dass ein hinterer Wandabschnitt (100R) des Stauraumes (100) einen Bereich direkt über der Schlussleuchteneinheit (150) bedeckt, wenn das Fahrzeug von dessen Seitenfläche aus betrachtet wird.

2. Grätschsitz-Fahrzeug nach Anspruch 1, bei dem:
der Stauraum einen Trägerabschnitt (105a) für die Schlussleuchteneinheit aufweist, der eine Schlussleuchteneinheit trägt.

3. Grätschsitz-Fahrzeug nach Anspruch 2, bei dem:
ein gebogener Abschnitt (C), der sich biegt, um einen vorstehenden Abschnitt zu bilden, der in eine Rückwärtsrichtung des Fahrzeuges zeigt, wenn das Grätschsitz-Fahrzeug in einer Draufsicht betrachtet wird, in einem hinteren Ende der Schlussleuchteneinheit gebildet wird; und
ein hinterer Endabschnitt (100RE) des Stauraumes eine Form aufweist, die sich entlang des gebogenen Abschnittes erstreckt, wenn das Grätschsitz-Fahrzeug in der Draufsicht betrachtet wird.

4. Grätschsitz-Fahrzeug nach Anspruch 3, bei dem:
die Schlussleuchteneinheit eine Bremsleuchteneinheit (151) und ein Paar Blinklichteinheiten (152L, 152R) aufweist, die zu den Außenseiten in der Breitenrichtung des Fahrzeuges von der Bremsleuchteneinheit aus positioniert sind; und
das Paar der Blinklichteinheiten einen gebogenen Abschnitt im Ergebnis dessen bildet, dass sie weiter nach vorn als die Bremsleuchteneinheit positioniert sind, wenn das Grätschsitz-Fahrzeug in der Draufsicht betrachtet wird.

5. Grätschsitz-Fahrzeug nach Anspruch 4, bei dem:
die Blinklichteinheiten eine Glühbirne (153) aufweisen; und
sich eine Achsenlinie (L1) der Glühbirne nach vorn und nach unten erstreckt, wenn das Grätschsitz-Fahrzeug von dessen Seitenfläche aus betrachtet wird.

6. Grätschsitz-Fahrzeug nach einem der vorhergehenden Ansprüche, das außerdem aufweist:
einen Gelenkabschnitt (120, 130), der den Sitz und einen Seitenwandabschnitt verbindet, so dass der Sitz geöffnet und geschlossen werden kann.

7. Grätschsitz-Fahrzeug nach Anspruch 6, bei dem:
der Gelenkabschnitt weiter nach außen in der Breitenrichtung des Fahrzeuges positioniert ist als der Seitenwandabschnitt.

8. Grätschsitz-Fahrzeug nach Anspruch 6 oder 7, bei dem der Sitz umfasst:
ein Sitzpolster (201), das eine Montagefläche (201C) aufweist, worauf der Fahrer sitzt;
eine untere Platte (203), die an einer Fläche befestigt ist, die sich auf der entgegengesetzten Seite des Sitzpolsters zur Montagefläche befindet; und
eine Sitzabdeckung (202), die an das Sitzpolster angrenzend ist, und die eine Außenfläche definiert.

9. Grätschsitz-Fahrzeug nach Anspruch 6, 7 oder 8, bei dem:
der Stauraum einen tragenden Abschnitt (106F, 106R) umfasst, der die auf den Sitz aufgebrachte Last trägt.

10. Grätschsitz-Fahrzeug nach Anspruch 9, bei dem:
ein benachbarter Abschnitt des Seitenwandabschnittes weiter nach außen in der Breitenrichtung des Fahrzeuges positioniert ist als der lastaufnehmende Abschnitt.

11. Grätschsitz-Fahrzeug nach Anspruch 8, bei dem:
sich die untere Platte weiter nach hinten erstreckt als das Sitzpolster, wenn das Grätschsitz-Fahrzeug von der Seite aus betrachtet wird; und
die untere Platte mit einem Abschnitt versehen ist, der weiter nach oben als eine untere Fläche (201B) des Sitzpolsters in einem hinteren Abschnitt der unteren Platte positioniert ist.

12. Grätschsitz-Fahrzeug nach Anspruch 9 oder 10, das außerdem aufweist:
ein Sitzbankschloss (160), das den Sitz verriegelt, das geöffnet und geschlossen werden kann, indem eine Mitte im Gelenkabschnitt ausgebildet ist; und
der tragende Abschnitt zur Vorderseite und Hinterseite des Sitzbankschlosses positioniert ist.

13. Grätschsitz-Fahrzeug nach Anspruch 12, bei dem:
unter den Abschnitten des Stauraumes mindestens die Seitenwandabschnitte ein synthetisches Harzmaterial aufweisen; und
das Sitzbankschloss an einem Seitenwandabschnitt befestigt ist.

14. Grätschsitz-Fahrzeug nach einem der vorhergehenden Ansprüche, bei dem:
der Stauraum einen Auflagevorsprung (107L, 107R) für eine Trennplatte aufweist, auf dem das vordere Ende (300F) einer Trennplatte (300) montiert ist, die den Stauraum in einer Aufwärts-Abwärts-Richtung trennt; und
der Auflagevorsprung für die Trennplatte so ausgebildet ist, dass er sich entlang eines Seitenwandabschnittes von einer unteren Fläche des Stauraumes aus erstreckt.

15. Grätschsitz-Fahrzeug nach einem der vorhergehenden Ansprüche, bei dem:
der Stauraum einen Befestigungsvorsprung (101L, 101R) aufweist, der am Karosseriegerippe befestigt ist und aus der unteren Fläche des Stauraumes nach unten vorsteht; und
das Karosseriegerippe eine vorgegebene Dicke in der Höhenrichtung (D_{H}) des Fahrzeuges und eine Aussparung (62A) aufweist, die den Befestigungsvorsprung aufnimmt.

16. Grätschsitz-Fahrzeug nach Anspruch 15, bei dem das Karosseriegerippe umfasst:
zwei Sitzschienen (61L, 61R), die sich in der Längenrichtung (D_{L}) des Fahrzeuges erstrecken, und die nebeneinander in der Breitenrichtung (D_{w}) des Fahrzeuges positioniert sind; und
eine Querstrebe (62), die sich in der Breitenrichtung des Fahrzeuges erstreckt, und die die Sitzschienen verbindet, wobei:
die Aussparung in der Querstrebe gebildet wird.

17. Grätschsitz-Fahrzeug nach einem der vorhergehenden Ansprüche, bei dem:
der Stauraum mit einem tragenden Abschnitt (106F, 106R) versehen ist, der die auf den Sitz angewandte Last trägt; und
der tragende Abschnitt über dem Karosseriegerippe positioniert ist.

18. Grätschsitz-Fahrzeug nach einem der vorhergehenden Ansprüche, bei dem:
der Stauraum einen Batteriemontageabschnitt (110) aufweist, in dem eine Batterie (180) montiert wird; und
der Batteriemontageabschnitt auf einer unteren Fläche eines vorderen Abschnittes (100FB) des Stauraumes vorhanden ist.

19. Grätschsitz-Fahrzeug nach Anspruch 1, das einen Verbrennungsmotor (40) aufweist, der einen Zylinderkopf (41) aufweist und auf dem Karosseriegerippe montiert ist, so dass sich eine Achsenlinie (L2) des Zylinderkopfes in einer im Wesentlichen horizontalen Richtung erstreckt, wobei:
der vordere Wandabschnitt über dem Zylinderkopf positioniert ist, wenn das Grätschsitz-Fahrzeug von der Seite aus betrachtet wird.

20. Grätschsitz-Fahrzeug nach Anspruch 19, bei dem:
der Verbrennungsmotor einen Trägerabschnitt (42) für die hintere Radachse aufweist, der die hintere Radachse trägt, und der ein Verbrennungsmotor in Schwingausführung ist, der drehbar mit Bezugnahme auf das Karosseriegerippe getragen wird, so dass der Verbrennungsmotor in der Lage ist, zusammen mit einem Hinterrad (80) zu schwingen.

21. Grätschsitz-Fahrzeug nach Anspruch 20, der aufweist:
einen Kraftstoffbehälter (50), der Kraftstoff speichert, der dem Verbrennungsmotor zugeführt wird; und
ein Trittbrett (30), auf dem ein Fahrer seinen/ihren Fuß anordnen kann, wobei:
der Kraftstoffbehälter unter dem Trittbrett positioniert ist.

22. Grätschsitz-Fahrzeug nach Anspruch 20 oder 21, bei dem:
der Zylinderkopf nach hinten vom Kraftstoffbehälter positioniert ist.

23. Grätschsitz-Fahrzeug nach einem der vorhergehenden Ansprüche, bei dem:
der Stauraum mit einem Ständergriff (190) versehen ist, den ein Fahrer hält, wenn er das Grätschsitz-Fahrzeug auf einem Ständer (70) aufrichtet.

24. Grätschsitz-Fahrzeug nach Anspruch 23, das aufweist:
eine Seitenabdeckung (140L), die eine äußere Seitenfläche des Stauraumes von der Außenseite in der Breitenrichtung des Fahrzeuges bedeckt, wobei:
die Seitenabdeckung mit einem Zugangsloch (145) versehen ist, das gestattet, dass der Ständergriff gehalten wird.

25. Grätschsitz-Fahrzeug nach einem der vorhergehenden Ansprüche, bei dem der mindestens eine Seitenwandabschnitt weiter zur Außenseite in einer Breitenrichtung des Fahrzeuges positioniert ist als das Karosseriegerippe.

26. Grätschsitz-Fahrzeug nach einem der vorhergehenden Ansprüche, bei dem der hintere Wandabschnitt weiter nach hinten positioniert ist als die Hinterradachse.

## Revendications

1. Véhicule du type à enfourcher (10), comprenant une ossature de carrosserie (60), un siège (200), un coffre à bagages (100), agencé au-dessous du siège (200), une unité de feu arrière (150), agencée au niveau d'une section arrière du véhicule du type à enfourcher, et un essieu de roue arrière (87), dans lequel le coffre à bagages comporte une section de paroi avant (100F), au moins une section de paroi latérale (100S) et une section de paroi arrière (100R), la section de paroi avant (100F) étant positionnée au-dessous d'une section d'extrémité avant du siège (201F), lorsque le véhicule du type à enfourcher est vu du côté, et (a) au moins une partie de la au moins une section de paroi latérale (100S) est positionnée au moins aussi loin vers l'extérieur, dans une direction de la largeur du véhicule (Dw), que l'ossature de la carrosserie (60) et (b) au moins une partie de la section de paroi arrière (100R) étant positionnée au moins aussi loin vers l'arrière que l'essieu de la roue arrière (87) lorsque le véhicule du type à enfourcher est vu du côté, **caractérisé en ce qu'**au moins une partie du coffre à bagages est formée directement vers le haut de l'unité de feu arrière (150), de sorte qu'elle s'étend directement au-dessus de l'unité de feu arrière (150), une section de paroi arrière (100R) du coffre à bagages (100) recouvrant une zone située directement au-dessus de l'unité de feu arrière (150) lorsque le véhicule est vu à partir de sa surface latérale.

2. Véhicule du type à enfourcher selon la revendication 1, dans lequel :
le coffre à bagages comporte une section de support de l'unité de feu arrière (105a) supportant une unité de feu arrière.

3. Véhicule du type à enfourcher selon la revendication 2, dans lequel :
une section courbée (C), courbée pour former une section en saillie, orientée, lorsque le véhicule du type à enfourcher est vu dans une vue en plan, dans une direction arrière du véhicule, est formée dans une extrémité arrière de l'unité de feu arrière ; et
une section d'extrémité arrière (100RE) du coffre à bagages a une forme s'étendant le long de la section courbée lorsque le véhicule du type à enfourcher est vu dans la vue en plan.

4. Véhicule du type à enfourcher selon la revendication 3, dans lequel :
l'unité de feu arrière comporte une unité de feux de freinage (151) et une paire d'unités de feux clignotants (152L, 152R), positionnées vers les côtés externes dans la direction de la largeur du véhicule, par rapport à l'unité de feux de freinage ; et
la paire d'unités de feux clignotants forme une section courbée par suite de son positionnement plus vers l'avant que l'unité de feux de freinage lorsque le véhicule du type à enfourcher est vu dans la vue en plan.

5. Véhicule du type à enfourcher selon la revendication 4, dans lequel :
les unités de feux clignotants comportent une ampoule (153) ; et
une ligne axiale (L1) de l'ampoule s'étend vers l'avant et vers le bas lorsque le véhicule du type à enfourcher est vu à partir de sa surface latérale.

6. Véhicule du type à enfourcher selon l'une quelconque des revendications précédentes, comprenant en outre :
une section articulée (120, 130), connectant le siège et une section de paroi latérale, de sorte que le siège peut être ouvert et fermé.

7. Véhicule du type à enfourcher selon la revendication 6, dans lequel :
la section articulée est positionnée plus vers l'extérieur, dans la direction de la largeur du véhicule, que la section de paroi latérale.

8. Véhicule du type à enfourcher selon les revendications 6 ou 7, dans lequel le siège englobe :
un coussin de siège (201), comportant une surface de montage (201C) sur laquelle le conducteur est assis ;
une plaque de fond (203), fixée sur une surface située sur le côté opposé du coussin de siège à la surface de montage ; et
une housse de siège (202) contiguë au coussin de siège et définissant une surface externe.

9. Véhicule du type à enfourcher selon les revendications 6, 7 ou 8, dans lequel :
le coffre à bagages englobe une section de support de la charge (106F, 106R) supportant la charge appliquée au siège.

10. Véhicule du type à enfourcher selon la revendication 9, dans lequel :
une partie adjacente de la section de paroi latérale est positionnée plus vers l'extérieur, dans la direction de la largeur du véhicule, que la section de réception de la charge.

11. Véhicule du type à enfourcher selon la revendication 8, dans lequel :
la plaque de fond s'étend plus vers l'arrière que le coussin de siège lorsque le véhicule du type à enfourcher est vu du côté ; et
la plaque de fond comporte une section positionnée plus vers le haut qu'une surface inférieure (201B) du coussin de siège au niveau d'une section arrière de la plaque de fond.

12. Véhicule du type à enfourcher selon les revendications 9 ou 10, comprenant en outre :
un verrou de siège (160) verrouillant le siège, pouvant être ouvert et fermé en plaçant un centre sur la section articulée ; et
la section de support de la charge est positionnée vers l'avant et vers l'arrière du verrou du siège.

13. Véhicule du type à enfourcher selon la revendication 12, dans lequel :
parmi les sections du coffre à bagages, au moins les sections de paroi latérale comprennent un matériau de résine synthétique ; et
le verrou du siège est fixé sur une section de paroi latérale.

14. Véhicule du type à enfourcher selon l'une quelconque des revendications précédentes, dans lequel :
le coffre à bagages comporte une saillie de support d'un panneau de séparation (107L, 107R), sur laquelle est montée une extrémité avant (300F) d'un panneau de séparation (300), séparant le coffre à bagages dans une direction allant vers le haut et vers le bas ; et
la saillie de support du panneau de séparation est formée de sorte à s'étendre le long d'une section de paroi latérale à partir d'une surface inférieure du coffre à bagages.

15. Véhicule du type à enfourcher selon l'une quelconque des revendications précédentes, dans lequel :
le coffre à bagages comporte une saillie de fixation (101L, 101R), fixée sur l'ossature de la carrosserie et débordant vers le bas à partir de la surface inférieure du coffre à bagages ; et
l'ossature de la carrosserie a une épaisseur prédéterminée dans la direction de la hauteur du véhicule (D_{H}), et comporte un évidement (62A) recevant la saillie de fixation.

16. Véhicule du type à enfourcher selon la revendication 15, dans lequel l'ossature de la carrosserie englobe :
deux rails de siège (61L, 61R), s'étendant dans la direction de la longueur du véhicule (D_{L}) et positionnés côte à côte dans la direction de la largeur du véhicule (D_{w}) ; et
une traverse (62), s'étendant dans la direction de la largeur du véhicule et connectant les rails de siège ; dans lequel :
l'évidement est formé dans la traverse.

17. Véhicule du type à enfourcher selon l'une quelconque des revendications précédentes, dans lequel :
le coffre à bagages comporte une section de support de la charge (106F, 106R) supportant la charge appliquée au siège ; et
la section de support de la charge est positionnée au-dessus de l'ossature de la carrosserie.

18. Véhicule du type à enfourcher selon l'une quelconque des revendications précédentes, dans lequel :
le coffre à bagages comporte une section de montage d'une batterie (110), sur laquelle est montée une batterie (180) ; et
la section de montage de la batterie est agencée sur une surface inférieure d'une section avant (100FB) du coffre à bagages.

19. Véhicule du type à enfourcher selon la revendication 1, comprenant un moteur à combustion interne (40), comportant une culasse de cylindre (41) et monté sur l'ossature de la carrosserie, de sorte qu'une ligne axiale (L2) de la culasse de cylindre s'étend dans une direction essentiellement horizontale; dans lequel :
la section de paroi avant est positionnée au-dessus de la culasse de cylindre lorsque le véhicule du type à enfourcher est vu du côté.

20. Véhicule du type à enfourcher selon la revendication 19, dans lequel :
le moteur à combustion interne comporte une section de support (42) de l'essieu de roue arrière, supportant l'essieu de la roue arrière, et est un moteur à combustion interne du type pivotant, supporté de manière pivotante par rapport à l'ossature de la carrosserie, de sorte que le moteur à combustion interne peut pivoter ensemble avec une roue arrière (80).

21. Véhicule du type à enfourcher selon la revendication 20, comprenant :
un réservoir de carburant (50) stockant le carburant introduit dans le moteur à combustion interne ; et
un repose-pieds (30) sur lequel un conducteur peut placer ses pieds, dans lequel :
le réservoir de carburant est positionné au-dessous du repose-pieds.

22. Véhicule du type à enfourcher selon les revendications 20 ou 21, dans lequel :
la culasse de cylindre est positionnée vers l'arrière du réservoir de carburant.

23. Véhicule du type à enfourcher selon l'une quelconque des revendications précédentes, dans lequel :
le coffre à bagages comporte une poignée stationnaire (190) que tient un conducteur lorsqu'il place le véhicule du type à enfourcher sur une béquille (70).

24. Véhicule du type à enfourcher selon la revendication 23, comprenant :
une housse latérale (140L) recouvrant une surface latérale externe du coffre à bagages à partir du côté externe dans la direction de la largeur du véhicule, dans lequel :
la housse latérale comporte un trou d'accès (145) permettant de tenir la poignée stationnaire.

25. Véhicule du type à enfourcher selon l'une quelconque des revendications précédentes, dans lequel la au moins une section de paroi latérale est positionnée plus vers l'extérieur, dans une direction de la largeur du véhicule, que l'ossature de la carrosserie.

26. Véhicule du type à enfourcher selon l'une quelconque des revendications précédentes, dans lequel la section de paroi arrière est positionnée plus vers l'arrière que l'essieu de la roue arrière.
